# EUROPEAN PATENT SPECIFICATION

(11) **EP 3 567 920 B1**
(45) Date of publication and mention of the grant of the patent: **28.07.2021**
(21) Application number: 18754712.0
(22) Date of filing: 12.02.2018
(51) Int. Cl.: H04W 36/00, H04W 12/04, H04W 12/00, H04W 12/03

(54) **INFORMATION TRANSMISSION METHOD, RADIO ACCESS APPARATUS AND TERMINAL**
INFORMATIONSÜBERTRAGUNGSVERFAHREN, FUNKZUGANGSVORRICHTUNG UND ENDGERÄT
PROCÉDÉ DE TRANSMISSION D'INFORMATIONS, APPAREIL D'ACCÈS RADIO ET TERMINAL

(30) Priority: 14.02.2017 CN 201710079522
(43) Date of publication of application: 13.11.2019
(73) Proprietor: Huawei Technologies Co., Ltd., Longgang District Shenzhen, Guangdong 518129 (CN)
(72) Inventor: XU, Xiaoying, Shenzhen, Guangdong 518129 (CN); LIU, Yalin, Shenzhen, Guangdong 518129 (CN); ZENG, Qinghai, Shenzhen, Guangdong 518129 (CN); HUANG, Qufang, Shenzhen, Guangdong 518129 (CN)
(74) Representative: Isarpatent
(86) International application number: PCT/CN2018/076468
(87) International publication number: WO 2018/149384

(56) References cited:
- WO-A1-2013/163815
- WO-A1-2014/043897
- CN-A- 102 209 320
- CN-A- 103 858 512
- CN-A- 103 858 513
- ZTE: "Handling token and key derivation for data transmitting in RRC_INACTIVE", 3GPP DRAFT; S3-170106 SECURITY METHOD OF UE TRANSMIT DATA IN RRC_INACTIVE STATE, 3RD GENERATION PARTNERSHIP PROJECT (3GPP), MOBILE COMPETENCE CENTRE ; 650, ROUTE DES LUCIOLES ; F-06921 SOPHIA-ANTIPOLI , vol. SA WG3, no. Sophia Antipolis (France); 20170206 - 20170210 2 February 2017 (2017-02-02), XP051217473, Retrieved from the Internet: URL:http://www.3gpp.org/ftp/Meetings_3GPP_ SYNC/SA3/Docs/ [retrieved on 2017-02-02]
- HUAWEI: "UL data transmission without RRC signalling without initiating transition to active (option A)", 3GPP DRAFT; R2-1700185, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. TSG RAN, no. Spokane (WA), USA; 20161114 - 20161118 24 January 2017 (2017-01-24), XP051224001, Retrieved from the Internet: URL:http://www.3gpp.org/ftp/tsg_ran/WG2_RL 2/TSGR2_AHs/2017_01_NR/Docs/ [retrieved on 2017-01-24]
- ZTE: "Discussion on security method of UE transmitting data in RRC_INACTIVE", 3GPP DRAFT; S3-170075 DISCUSSION ON SECURITY METHOD OF UE TRANSMIT DATA IN RRC_INACTIVE STATE, 3RD GENERATION PARTNERSHIP PROJECT (3GPP), MOBILE COMPETENCE CENTRE ; 650, ROUTE DES LUCIOLES ; F-06921 S , vol. SA WG3, no. Sophia Antipolis (France); 20170206 - 20170210 2 February 2017 (2017-02-02), XP051217442, Retrieved from the Internet: URL:http://www.3gpp.org/ftp/Meetings_3GPP_ SYNC/SA3/Docs/ [retrieved on 2017-02-02]
- SA3: "Reply LS on R2-1700656 on RRC INACTIVE", 3GPP DRAFT; R2-1702207_S3-170460, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Athens, Greece; 20170213 - 20170217 13 February 2017 (2017-02-13), XP051223988, Retrieved from the Internet: URL:http://www.3gpp.org/ftp/tsg_ran/WG2_RL 2/TSGR2_97/LSin/ [retrieved on 2017-02-13]
- 3GPP RAN2: "LS to SA3 on Small Data Transmission", 3GPP DRAFT; S3-170054 R2-1700656 LS TO SA3 ON SMALL DATA TRANSMISSION RS_V6, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CE , vol. SA WG3, no. Sophia Antipolis (France); 20170206 - 20170210 2 February 2017 (2017-02-02), XP051217422, Retrieved from the Internet: URL:http://www.3gpp.org/ftp/Meetings_3GPP_ SYNC/SA3/Docs/ [retrieved on 2017-02-02]

## Description

### TECHNICAL FIELD

Embodiments of the present invention relate to the wireless communications field, and in particular, to an information transmission method, and a serving radio access device.

### BACKGROUND

With the development of wireless communications technologies, a terminal remains in a network-connected state when the terminal does not need to send or receive data. To save network resources, a lightly connected state is used in a long term evolution (Long Term Evolution, LTE) network, and a state referred to as an inactive state (inactive) is introduced to a 5G technology such as a new radio access technology (Radio Access Technique, RAT). Behavior in the state is similar to that in the lightly connected state in LTE, and allows the terminal to remain a connection between a core-network node and a radio access network.

Interfaces of a terminal in an "LTE lightly connected state/5G INACTIVE" state, for example, user equipment (user Equipment, UE) in a core network and a radio access network (Radio Access Network, RAN) are anchored at a RAN node (a radio access device to which the terminal is connected during movement for data transmission). When the terminal moves inside a predetermined area (which is referred to as a notification area in 5G or referred to as a paging area in LTE), the terminal does not need to notify a serving radio access device, and once the terminal moves out of this area, the terminal needs to notify a position of the terminal to a radio access device whose coverage the terminal has been moved to, that is, a tracking area update process is performed. When the terminal in the "LTE lightly connected state/5G INACTIVE state" moves to coverage of another radio access device and needs to send data, the terminal initiates a connection restoration process to the serving radio access device whose coverage the terminal has been moved to. The serving radio access device provides a cell having an air interface resource for the terminal, so that the terminal enters a connected (ACTIVE) state. The serving radio access device initiates a context request of the terminal to an anchor radio access device to switch a context of the terminal to the current serving radio access device of the terminal, and sends a path switch request to the core network to switch a core-network connection path corresponding to the terminal to the current serving radio access device, so as to implement data transmission.

However, in the foregoing manners, after performing serving radio access device switching, the terminal still uses a key parameter allocated by the serving radio access device corresponding to the terminal before switching or obtained through negotiation with the serving radio access device, to transmit data to the switched serving radio access device. As a result, the switched serving radio access device cannot correctly decode uplink data from the terminal.

Document "Handling token and key derivation for data transmitting in RRC_INACTIVE" (3GPP S3-170106)) from the company ZTE discloses a security method of UE transmitting data in RRC_INACTIVE state.

Document "UL data transmission without RRC signalling without initiating transition to active (option A)" (3GPP R2-1700185)) from the company Huawei discloses a solution for sending UL data without RRC signalling in inactive state and without UE initiating transition to connect.

### SUMMARY

The present invention provides an information transmission method according to claim 1 and a serving radio access device according to claim 5, so that after a terminal in an inactive state performs serving radio access device switching, a serving radio access device can correctly decode uplink data transmitted by the terminal. Further advantageous embodiments and improvements of the present invention are listed in the dependent claims. Hereinafter, before coming to a detailed description of the embodiments of the present invention with reference to the attached drawings, some aspects of the invention which contribute to the understanding of the invention are listed separately. However, it should be noted that the invention is defined by the attached claims, and any examples and embodiments not covered by these claims are also to be understood as aspects contributing to the understanding of the invention.

A first aspect of the embodiments of the present invention provides an information transmission method, including:
receiving, by a serving radio access device, a first uplink data packet and a terminal identifier from a terminal, where the first uplink data packet includes uplink data;
if the serving radio access device determines that a radio access device that allocates the terminal identifier is not the serving radio access device,
sending, by the serving radio access device, first information to the terminal, where the first information is used to provide a notification about a key parameter used for encrypting a second uplink data packet from the terminal, or to instruct the terminal to deduce a key used for encrypting the second uplink data packet; and
receiving, by the serving radio access device, the second uplink data packet from the terminal, where the second uplink data packet includes the uplink data or newly transmitted uplink data.

According to the technical solution according to the first aspect, the current serving radio access device of the terminal determines, based on the terminal identifier sent together with the uplink data packet, whether the radio access device that allocates the terminal identifier is the serving access device. If the radio access device that allocates the terminal identifier is not the serving access device, the serving radio access device may incorrectly decode the uplink data from the terminal. Therefore, the serving radio access device notifies the terminal of the key parameter used for the retransmitted uplink data or the newly transmitted uplink data, for performing encryption, or instructs the terminal to deduce the key used for encrypting the second uplink data packet. In this way, the serving radio access device can correctly decode the retransmitted uplink data or the newly transmitted uplink data from the terminal.

Based on the first aspect, in a first possible implementation of the first aspect, the method further includes:
discarding, by the serving radio access device, the first uplink data packet.

The serving radio access device may incorrectly decode the first uplink data packet. Therefore, in the possible implementation, the serving radio access device discards the first uplink data to reduce a waste of system resources.

Based on the first aspect or the first possible implementation of the first aspect, in a second possible implementation of the first aspect, the method further includes:
receiving, by the serving radio access device, the first information from the radio access device that allocates the terminal identifier.

In the possible implementation, the key, notified by the serving radio access device to the terminal, used for the second uplink data packet is obtained from the radio access device that allocates the terminal identifier.

Based on any one of the first aspect to the second possible implementation of the first aspect, in a third possible implementation of the first aspect, the method further includes:
requesting, by the serving radio access device, a context of the terminal from the radio access device that allocates the terminal identifier; and
receiving, by the serving radio access device, the context of the terminal and the first information from the radio access device that allocates the terminal identifier.

In the possible implementation, the first information may be obtained in a process in which the serving radio access device obtains the context of the terminal.

Based on any one of the first aspect to the third possible implementation of the first aspect, in the third possible implementation of the first aspect, a key used for encrypting the first uplink data packet is generated through negotiation between the terminal and the radio access device that allocates the terminal identifier.

In the possible implementation, the following is limited: The key used for the first uplink data packet is generated through negotiation between the radio access device that allocates the terminal identifier and the terminal. Therefore, the serving radio access device may incorrectly decode the uplink data packet.

A second aspect of the embodiments of the present invention provides an information transmission method, including:
sending, by a terminal, a first uplink data packet and a terminal identifier to a serving radio access device, where the first uplink data packet includes uplink data;
receiving, by the terminal, first information sent by the serving radio access device, where the first information is used to provide a notification about a key parameter used for encrypting a second uplink data packet from the terminal; and
encrypting, by the terminal, the second uplink data packet based on the first information, and sending the second uplink data packet to the serving radio access device, where the second uplink data packet includes the uplink data or newly transmitted uplink data.

According to the technical solution according to the second aspect, the current serving radio access device of the terminal determines, based on the terminal identifier sent together with the uplink data packet, whether a radio access device that allocates the terminal identifier is the serving access device. If the radio access device that allocates the terminal identifier is not the serving access device, the serving radio access device may incorrectly decode the uplink data from the terminal. Therefore, the serving radio access device notifies the terminal of the key parameter used for the retransmitted uplink data or the newly transmitted uplink data, for performing encryption, or instructs the terminal to deduce the key used for encrypting the second uplink data packet. In this way, the serving radio access device can correctly decode the retransmitted uplink data or the newly transmitted uplink data from the terminal.

Based on the second aspect, in a first possible implementation of the second aspect, a key used for encrypting the first uplink data packet is generated through negotiation between the terminal and the radio access device that allocates the terminal identifier.

In the possible implementation, the following is limited: The key used for the first uplink data packet is generated through negotiation between the radio access device that allocates the terminal identifier and the terminal.

A third aspect of the embodiments of the present invention provides a radio access device. The radio access device is a serving radio access device that serves the terminal currently. The serving radio access device includes a transmitter and a receiver. The transmitter is configured to perform a sending action of the serving radio access device according to the first aspect and various possible implementations of the first aspect of the embodiments of the present invention. The receiver is configured to perform a receiving action of the serving radio access device according to the first aspect and the various possible implementations of the first aspect of the embodiments of the present invention. A technical effect the same as that achieved by the first aspect and the various possible implementations of the first aspect of the embodiments of the present invention can be achieved by using the radio access device according to the third aspect of the embodiments of the present invention. For details, refer to the foregoing description.

A fourth aspect of the embodiments of the present invention provides a terminal. The terminal includes a transmitter, a receiver, and a processor. The transmitter is configured to perform a sending action of the terminal according to the second aspect and various possible implementations of the second aspect of the embodiments of the present invention. The receiver is configured to perform a receiving action of the terminal according to the second aspect and the various possible implementations of the second aspect of the embodiments of the present invention. The processor is configured to perform processing actions such as obtaining and determining of the terminal according to the second aspect and the various possible implementations of the second aspect of the embodiments of the present invention. A technical effect the same as that achieved by the second aspect and the various possible implementations of the second aspect of the embodiments of the present invention can be achieved by using the terminal according to the fourth aspect of the embodiments of the present invention. For details, refer to the foregoing description.

### BRIEF DESCRIPTION OF DRAWINGS

FIG. 1 is a schematic architectural diagram of a wireless communications system according to an embodiment of the present invention;
FIG. 2 is a schematic diagram of system interaction in an information transmission method according to an embodiment of the present invention;
FIG. 3 is a schematic structural diagram of a radio access device according to an embodiment of the present invention; and
FIG. 4 is a schematic structural diagram of a terminal according to an embodiment of the present invention.

### DESCRIPTION OF EMBODIMENTS

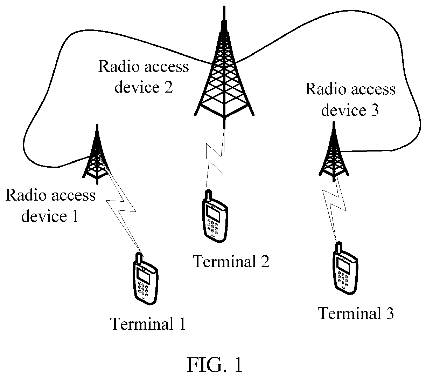

In a schematic architectural diagram of a wireless communications system shown in FIG. 1, radio access devices, for example, various transmission/reception points (transmission reception point, TRP) such as a base station and a wireless local area network access point, provide an access service in a licensed spectrum or an access service in an unlicensed spectrum for terminals. The terminals and the radio access devices transmit various types of data such as control signaling or service data through protocol layers on an uplink and a downlink. The control signaling is mainly transmitted on a control channel, and the service data is mainly transmitted on a service channel. These protocol layers include a physical layer, a media access control layer, a radio resource control layer, and the like. Data transmitted at any layer is finally carried at the physical layer and is transmitted in radio space through at least one physical antenna.

To implement data transmission at the physical layer, a plurality of time units are obtained through division in time domain, and a plurality of frequency units are obtained through division in frequency domain. For example, in a long term evolution (long term evolution, LTE) system, a time unit may be one radio frame. One radio frame has a length of 10 milliseconds (ms), and includes 10 subframes each having a length of 1 ms. One subframe includes several orthogonal frequency division multiplexing (Orthogonal Frequency Division Multiplexing, OFDM) symbols. A frequency unit may be one subcarrier, and one subcarrier is usually 15 kHz (kilohertz). Combinations of different quantities of subcarriers may implement different total system bandwidth. With in-depth research on LTE systems and an increase in requirements for an enhanced mobile broadband (enhanced mobile broadband, eMBB) service, a massive machine type communication (massive machine type communication, mMTC) service, and an ultra reliable and low latency communications (ultra reliable and low latency communication, URLLC) service in a fifth generation mobile communications system, a time length occupied by one time unit and a frequency length occupied by one frequency unit may vary in time domain and frequency domain as a wireless communication requirement varies. In a wireless communications system, definitions of a time unit and a frequency unit used for data transmission can be obtained by using different wireless parameter configurations, such as a parameter that may be referred to as numerology (numerology) in the fifth generation mobile communications system, to meet different radio communication requirements.

A terminal in a radio access network does not always have data to be transmitted. Therefore, after a time period in which the terminal has no data to be transmitted, to reduce power consumption of the terminal, the terminal enters an inactive state. However, as the terminal moves, if the terminal is in the inactive state, and the terminal switches to a new serving radio access device, the terminal still encrypts a data packet by using a key parameter ever obtained when the terminal is in the inactive state or an active state, and sends the data packet to the new serving radio access device. In this case, because the new serving radio access device does not know the key parameter used by the terminal, the radio access device may incorrectly decode the received data packet.

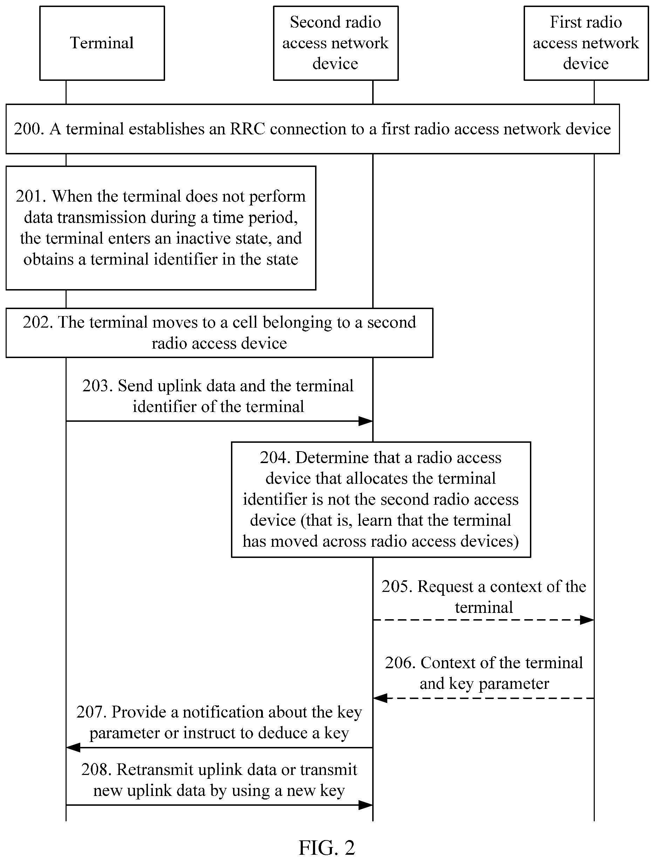

In view of the foregoing technical problem, an aspect of the embodiments of the present invention provides a data processing method. FIG. 2 is a schematic flowchart of an information transmission method, including the following content.

200. When a terminal has data to be transmitted, the terminal in an idle (idle) state initiates a radio link control connection to a first radio access device, establishes the connection in a cell (which is referred to as a source cell herein for ease of description in the following) of the first radio access device to enter a connected state, and negotiates with the first radio access device about a security parameter used in data transmission, such as a key and a security algorithm.

It should be noted that in this embodiment of the present invention, the terminal may have three states: an idle (idle) state, an inactive (inactive) state, and a connected (active) state. When the terminal is in the inactive state, the terminal stores a context of the UE, and maintains a connection between an access network and a CN. When moving inside a specified area of a network, the terminal does not notify the network. When the terminal is in the idle state, the terminal neither stores the context of the UE nor maintains the connection between the access network and the CN. For details, refer to an existing definition.

201. When the terminal does not perform data transmission during a time period, the first radio access device may instruct the UE to enter an inactive state to save electricity, and allocate a terminal identifier to the terminal in the inactive state. The terminal identifier of the terminal is unique in at least one cell range of a notification area or a paging area in which the first radio access device is located. The terminal identifier indicates information about the radio access device to which the source cell in which the terminal is located belongs. For example, the terminal identifier may be generated by using an identifier of the first radio access device and a unique identifier allocated by the first radio access device. There is another manner for generating the terminal identifier herein.

202. As the terminal moves, the terminal may reselect or switch to a new cell based on cell signal quality during a moving process. A second radio access device to which the new cell belongs is different from the first radio access device to which the source cell belongs. Optionally, the first radio access device further notifies the terminal of a key deduction manner.

203. When the terminal has uplink data to be sent, the terminal performs security protection by using the key negotiated in the source cell, that is, encrypts an uplink data packet (a first uplink data packet), and performs integrity protection on the terminal identifier. The terminal sends the first uplink data packet and the terminal identifier to the second radio access device through the new cell.

204. After receiving the first uplink data packet and the terminal identifier, the second radio access device learns, through parsing, that the radio access device corresponding to the terminal identifier is not the current radio access device (that is, the second radio access device). In this way, the second radio access device learns that the terminal moves across radio access devices. On one hand, the second radio access device may discard the first uplink data packet; on the other hand, the second radio access device notifies the terminal of a key parameter used for uplink data in the retransmitted first uplink data packet or newly transmitted uplink data. The key parameter is notified by the second radio access device. The key parameter may be stored on the terminal in advance or may not be stored on the terminal in advance. The terminal may obtain a key by deducing the key parameter. The terminal may retransmit the uplink data in the first uplink data packet or transmit new uplink data in a form of a second uplink data packet.

In the foregoing implementations, the key parameter notified by the second radio access device may be determined by the second radio access device and then notified to the terminal by the second radio access device. In another possible implementation, the key parameter notified by the second radio access device may be alternatively obtained by using the first radio access device. The method further includes the following steps:
205 (optionally). The second radio access device (the current serving radio access device) requests the first radio access device (the radio access device to which the source cell belongs) for the context of the terminal. Optionally, the terminal identifier is carried in the request.
206 (optionally). The first radio access device responds to the request, and sends the context of the terminal carried in the response to the second radio access device, where the response further includes a key parameter used for encrypting a second uplink data packet, and the second uplink data packet includes uplink data in the first uplink data packet (that is, the uplink data in the retransmitted first uplink data packet) or the newly transmitted uplink data. It should be noted that the key parameter used for encrypting the second uplink data packet may be either a key or a group of parameters used for determining the key, such as NextHopChainingCount in LTE. Optionally, if the first radio access device sends the key parameter to the second radio access device, the second radio access device may send the key parameter to the terminal. Alternatively, the terminal has been connected to the first radio access device before, and therefore the terminal knows a manner for determining the key parameter by the first radio access device. In this case, the second radio access device may instruct the terminal to deduce, according to a key obtaining manner negotiated between the terminal and the first radio access device, the key used for encrypting the second uplink data packet, with no need to send the key parameter to the terminal. In this case, the terminal and the second radio access device obtain the same key to transmit data.
207. The second radio access device notifies the terminal of the key parameter, or instructs the terminal to deduce a key according to a key obtaining manner previously negotiated between the terminal and the first radio access device.
208. The terminal encrypts the second uplink data packet based on the obtained key, to retransmit the uplink data in the first uplink data packet or transmit new uplink data.

According to the technical solution provided in this embodiment of the present invention, the current serving radio access device of the terminal determines, based on the terminal identifier sent together with the uplink data packet, whether the radio access device that allocates the terminal identifier is the serving access device. If the radio access device that allocates the terminal identifier is not the serving access device, the serving radio access device may incorrectly decode the uplink data from the terminal. Therefore, the serving radio access device notifies the terminal of the key parameter used for the retransmitted uplink data or the newly transmitted uplink data, or instructs the terminal to deduce the key, for performing encryption. In this way, the serving radio access device can correctly decode the retransmitted uplink data or the newly transmitted uplink data from the terminal.

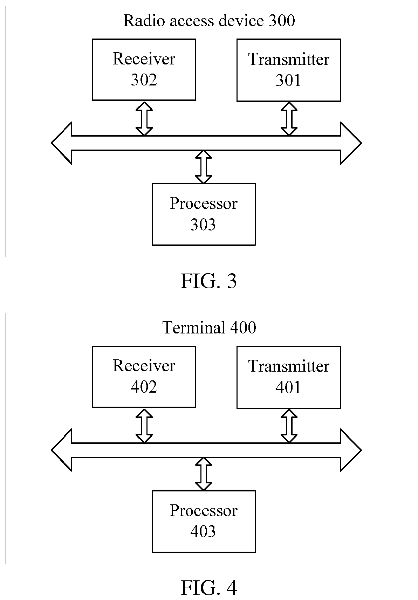

An embodiment of the present invention provides a radio access device 300. The radio access device 300 is a serving radio access device that currently performs data transmission with the terminal. In a schematic structural diagram of the radio access device 300 shown in FIG. 3, a transmitter 301, a receiver 302, and a processor 303 are included, and are connected together by using various electronic line interfaces (for example, a bus).

The receiver 302 is configured to receive a first uplink data packet and a terminal identifier from the terminal, where the first uplink data packet includes uplink data.

The transmitter 301 is configured to send first information to the terminal when a radio access device that allocates the terminal identifier is not the serving radio access device, where the first information is used to determine a key used for encrypting a second uplink data packet from the terminal, or to instruct the terminal to deduce the key used for encrypting the second uplink data packet.

The receiver 302 is further configured to receive the second uplink data packet from the terminal, where the second uplink data packet includes the uplink data or newly transmitted uplink data.

Optionally, the radio access device 300 further includes: the processor 300, configured to discard the first uplink data packet. It should be noted that the first uplink data packet received by the receiver 302 may be decoded incorrectly by the processor. Therefore, when determining that the radio access device that allocates the terminal identifier is not the serving radio access device, the processor may discard the first uplink data directly instead of decoding the first uplink data packet.

Optionally, the receiver 302 is further configured to receive the first information from the radio access device that allocates the terminal identifier.

Optionally, the transmitter 301 is further configured to send a request to the radio access device that allocates the terminal identifier, where the request is used to obtain a context of the terminal. The receiver 302 is further configured to receive the context of the terminal and the first information from the radio access device that allocates the terminal identifier.

It should be noted that a key used for encrypting the first uplink data packet is generated through negotiation between the terminal and the radio access device that allocates the terminal identifier.

The radio access device provided in this embodiment of the present invention may perform an action of the radio access device in the foregoing method embodiment, for example, the embodiment shown in FIG. 2. The transmitter 301 is configured to perform a sending action of the radio access device in the foregoing method embodiment. The receiver 302 is configured to perform a receiving action of the radio access device in the foregoing method embodiment. The processor 303 is configured to perform processing actions such as obtaining and determining in the foregoing method embodiment. For details, refer to the foregoing method embodiment, and details are not further described in this embodiment.

An embodiment of the present invention provides a terminal 400. In a schematic structural diagram of the terminal 400 shown in FIG. 4, a transmitter 401, a receiver 402, and a processor 403 are included, and are connected together by using various electronic line interfaces (for example, a bus).

The transmitter 401 is configured to send a first uplink data packet and a terminal identifier to a serving radio access device, where the first uplink data packet includes uplink data.

The receiver 402 is configured to receive first information sent by the serving radio access device, where the first information is used to determine a key used for encrypting a second uplink data packet from the terminal, or to instruct the terminal to deduce the key used for encrypting the second uplink data packet.

The processor 403 is configured to encrypt the second uplink data packet based on the first information.

The transmitter 401 is further configured to send the second uplink data packet to the serving radio access device, where the second uplink data packet includes the uplink data or newly transmitted uplink data.

It should be noted that the terminal 400 provided in this embodiment of the present invention may perform an action of the terminal in the foregoing method embodiment, for example, the embodiment shown in FIG. 3. The transmitter 401 is configured to perform a sending action of the radio access device in the foregoing method embodiment. The receiver 402 is configured to perform a receiving action of the radio access device in the foregoing method embodiment. The processor 403 is configured to perform processing actions such as obtaining and determining in the foregoing method embodiment. For details, refer to the foregoing method embodiment, and details are not further described in this embodiment.

To implement communication between the terminal 400 and the radio access device 300, the terminal 400 and the radio access device 300 each include at least one logical antenna array, and are mapped to at least one physical antenna. A quantity of physical antennas of the terminal 400 may be the same as or may be different from a quantity of physical antennas of the radio access device 300. For specific antenna configurations and utilization, refer to the prior art.

According to the terminal 400 and the radio access device 300, the current serving radio access device of the terminal determines, based on the terminal identifier sent together with the uplink data packet, whether the radio access device that allocates the terminal identifier is the serving access device. If the radio access device that allocates the terminal identifier is not the serving access device, the serving radio access device may incorrectly decode the uplink data from the terminal. Therefore, the serving radio access device notifies the terminal of the key parameter used for the retransmitted uplink data or the newly transmitted uplink data, or instructs the terminal to deduce the key, for performing encryption. In this way, the serving radio access device can correctly decode the retransmitted uplink data or the newly transmitted uplink data from the terminal.

A person skilled in the art should understand that the embodiments of the present invention may be provided as a method, a system, or a computer program product. Therefore, the present invention may use a form of hardware only embodiments, software only embodiments, or embodiments with a combination of software and hardware. In addition, the present invention may use a form of a computer program product that is implemented on one or more computer-usable storage media (including but not limited to a disk memory, a CD-ROM, and an optical memory) that include computer-usable program code.

The present invention is described with reference to the flowcharts and/or block diagrams of the method, the apparatus (system), and the computer program product according to the embodiments of the present invention. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of another programmable (data processing) device to generate a machine, so that the instructions executed by a computer or a processor of another programmable (data processing) device generate an apparatus for implementing a specific function in one or more processes in the flowcharts and/or in one or more blocks in the block diagrams.

These computer program instructions may be stored in a computer readable memory that can instruct the computer or another programmable (data processing) device to work in a specific manner, so that the instructions stored in the computer readable memory generate an artifact that includes an instruction apparatus. The instruction apparatus implements a specific function in one or more processes in the flowcharts and/or in one or more blocks in the block diagrams.

These computer program instructions may be loaded onto a computer or another programmable data processing device, so that a series of operations and steps are performed on the computer or another programmable device, thereby generating computer-implemented processing. Therefore, the instructions executed on the computer or another programmable device are used to provide steps for implementing a specific function in one or more processes in the flowcharts and/or in one or more blocks in the block diagrams.

Although some preferred embodiments of the present invention have been described, a person skilled in the art can make changes and modifications to these embodiments once they learn the basic inventive concept.

## Claims

1. An information transmission method, comprising:
receiving (203), by a serving radio access device, a first uplink data packet and a terminal identifier from a terminal which is in an inactive state and switching from a radio access device that allocates the terminal identifier to the serving radio access device, wherein the first uplink data packet comprises uplink data;
if the serving radio access device determines (204) that the radio access device that allocates the terminal identifier is not the serving radio access device,
sending (207), by the serving radio access device, first information to the terminal, wherein the first information is used to provide a notification about a key parameter of a key used for encrypting a second uplink data packet from the terminal, or to instruct the terminal to deduce the key used for encrypting the second uplink data packet; and
receiving (208), by the serving radio access device, the second uplink data packet from the terminal, wherein the second uplink data packet comprises the uplink data or newly transmitted uplink data,
wherein the method further comprises:
discarding, by the serving radio access device, the first uplink data packet.

2. The method according to claim 1, further comprising:
receiving, by the serving radio access device, the first information from the radio access device that allocates the terminal identifier.

3. The method according to claim 1 or 2, further comprising:
requesting (205), by the serving radio access device, a context of the terminal from the radio access device that allocates the terminal identifier; and
receiving (206), by the serving radio access device, the context of the terminal and the first information from the radio access device that allocates the terminal identifier.

4. The method according to any one of claims 1 to 3, wherein a key used for encrypting the first uplink data packet is generated through negotiation between the terminal and the radio access device that allocates the terminal identifier.

5. A serving radio access device (300), comprising:
a receiver (302), configured to receive a first uplink data packet and a terminal identifier from a terminal which is in an inactive state and switching from a radio access device that allocates the terminal identifier to the serving radio access device, wherein the first uplink data packet comprises uplink data; and
a transmitter (301), configured to send first information to the terminal when the radio access device that allocates the terminal identifier is not the serving radio access device, wherein the first information is used to determine a key used for encrypting a second uplink data packet from the terminal, or to instruct the terminal to deduce the key used for encrypting the second uplink data packet, wherein
the receiver is further configured to receive the second uplink data packet from the terminal, wherein the second uplink data packet comprises the uplink data or newly transmitted uplink data, and
wherein the radio access device further comprises a processor (303) configured to discard the first uplink data packet.

6. The radio access device according to claim 5, wherein
the receiver is further configured to receive the first information from the radio access device that allocates the terminal identifier.

7. The radio access device according to claim 5 or 6, wherein
the transmitter is further configured to send a request to the radio access device that allocates the terminal identifier, wherein the request is used to obtain a context of the terminal; and
the receiver is further configured to receive the context of the terminal and the first information from the radio access device that allocates the terminal identifier.

8. The radio access device according to any one of claims 5 to 7, wherein a key used for encrypting the first uplink data packet is generated through negotiation between the terminal and the radio access device that allocates the terminal identifier.

## Patentansprüche

1. Informationsübertragungsverfahren, umfassend:
Empfangen (203), durch eine bedienende Funkzugangsvorrichtung, eines ersten Uplink-Datenpakets und einer Endgerätekennung von einem Endgerät, das sich in einem inaktiven Zustand befindet und von einer Funkzugangsvorrichtung, die die Endgerätekennung zuweist, zu der bedienenden Funkzugangsvorrichtung umschaltet,
wobei das erste Uplink-Datenpaket Uplink-Daten umfasst;
wenn die bedienende Funkzugangsvorrichtung bestimmt (204), dass die Funkzugangsvorrichtung, die die Endgerätekennung zuweist, nicht die bedienende Funkzugangsvorrichtung ist,
Senden (207), durch die bedienende Funkzugangsvorrichtung, von ersten Informationen an das Endgerät, wobei die ersten Informationen verwendet werden, um eine Benachrichtigung über einen Schlüsselparameter eines Schlüssels bereitzustellen, der zum Verschlüsseln eines zweiten Uplink-Datenpakets von dem Endgerät verwendet wird, oder um das Endgerät anzuweisen, den Schlüssel, der zum Verschlüsseln des zweiten Uplink-Datenpakets verwendet wird, abzuleiten; und
Empfangen (208), durch die bedienende Funkzugangsvorrichtung, des zweiten Uplink-Datenpakets von dem Endgerät, wobei das zweite Uplink-Datenpaket die Uplink-Daten oder neu übertragenen Uplink-Daten umfasst;
wobei das Verfahren ferner umfasst:
Verwerfen, durch die bedienende Funkzugangsvorrichtung, des ersten Uplink-Datenpakets.

2. Verfahren nach Anspruch 1, ferner umfassend:
Empfangen, durch die bedienende Funkzugangsvorrichtung, der ersten Informationen von der Funkzugangsvorrichtung, die die Endgerätekennung zuweist.

3. Verfahren nach Anspruch 1 oder 2, ferner umfassend:
Anfordern (205), durch die bedienende Funkzugangsvorrichtung, eines Kontexts des Endgeräts von der Funkzugangsvorrichtung, die die Endgerätekennung zuweist; und
Empfangen (206), durch die bedienende Funkzugangsvorrichtung, des Kontexts des Endgeräts und der ersten Informationen von der Funkzugangsvorrichtung, die die Endgerätekennung zuweist.

4. Verfahren nach einem der Ansprüche 1 bis 3, wobei ein Schlüssel, der zum Verschlüsseln des ersten Uplink-Datenpakets verwendet wird, durch Aushandlung zwischen dem Endgerät und der Funkzugangsvorrichtung, die die Endgerätekennung zuweist, erzeugt wird.

5. Bedienende Funkzugangsvorrichtung (300), umfassend:
einen Empfänger (302), der dazu konfiguriert ist, ein erstes Uplink-Datenpaket und eine Endgerätekennung von einem Endgerät zu empfangen, das sich in einem inaktiven Zustand befindet und von einer Funkzugangsvorrichtung, die die Endgerätekennung zuweist, zu der bedienenden Funkzugangsvorrichtung umschaltet,
wobei das erste Uplink-Datenpaket Uplink-Daten umfasst; und
einen Sender (301), der dazu konfiguriert ist, erste Informationen an das Endgerät zu senden, wenn die Funkzugangsvorrichtung, die die Endgerätekennung zuweist, nicht die bedienende Funkzugangsvorrichtung ist, wobei die ersten Informationen verwendet werden, um einen Schlüssel zu bestimmen, der zum Verschlüsseln eines zweiten Uplink-Datenpakets von dem Endgerät verwendet wird, oder um das Endgerät anzuweisen, den Schlüssel, der zum Verschlüsseln des zweiten Uplink-Datenpakets verwendet wird, abzuleiten, wobei
der Empfänger ferner dazu konfiguriert ist, das zweite Uplink-Datenpaket von dem Endgerät zu empfangen, wobei das zweite Uplink-Datenpaket die Uplink-Daten oder neu übertragenen Uplink-Daten umfasst, und
wobei die Funkzugangsvorrichtung ferner einen Prozessor (303) umfasst, der dazu konfiguriert ist, das erste Uplink-Datenpaket zu verwerfen.

6. Funkzugangsvorrichtung nach Anspruch 5, wobei der Empfänger ferner dazu konfiguriert ist, die ersten Informationen von der Funkzugangsvorrichtung, die die Endgerätekennung zuweist, zu empfangen.

7. Funkzugangsvorrichtung nach Anspruch 5 oder 6, wobei
der Sender ferner dazu konfiguriert ist, eine Anforderung an die Funkzugangsvorrichtung, die die Endgerätekennung zuweist, zu senden, wobei die Anforderung verwendet wird, um einen Kontext des Endgeräts zu erhalten; und
der Empfänger ferner dazu konfiguriert ist, den Kontext des Endgeräts und die ersten Informationen von der Funkzugangsvorrichtung, die die Endgerätekennung zuweist, zu empfangen.

8. Funkzugangsvorrichtung nach einem der Ansprüche 5 bis 7, wobei ein Schlüssel, der zum Verschlüsseln des ersten Uplink-Datenpakets verwendet wird, durch Aushandlung zwischen dem Endgerät und der Funkzugangsvorrichtung, die die Endgerätekennung zuweist, erzeugt wird.

## Revendications

1. Procédé de transmission d'informations, comprenant :
la réception (203), par un dispositif d'accès radio de desserte, d'un premier paquet de données de liaison montante et d'un identifiant de terminal en provenance d'un terminal qui est dans un état inactif et qui commute à partir d'un dispositif d'accès radio qui attribue l'identifiant de terminal au dispositif d'accès radio de desserte, dans lequel le premier paquet de données de liaison montante comprend des données de liaison montante ;
si le dispositif d'accès radio de desserte détermine (204) que le dispositif d'accès radio qui attribue l'identifiant de terminal n'est pas le dispositif d'accès radio de desserte,
l'envoi (207), par le dispositif d'accès radio de desserte, de premières informations au terminal, dans lequel les premières informations sont utilisées pour fournir une notification concernant un paramètre de clé d'une clé utilisée pour chiffrer un second paquet de données de liaison montante à partir du terminal, ou pour ordonner au terminal de déduire la clé utilisée pour chiffrer le second paquet de données de liaison montante ; et
la réception (208), par le dispositif d'accès radio de desserte, du second paquet de données de liaison montante en provenance du terminal, dans lequel le second paquet de données de liaison montante comprend les données de liaison montante ou les données de liaison montante nouvellement transmises,
dans lequel le procédé comprend en outre :
le rejet, par le dispositif d'accès radio de desserte, du premier paquet de données de liaison montante.

2. Procédé selon la revendication 1, comprenant en outre :
la réception, par le dispositif d'accès radio de desserte, des premières informations en provenance du dispositif d'accès radio qui attribue l'identifiant de terminal.

3. Procédé selon la revendication 1 ou 2, comprenant en outre :
la demande (205), par le dispositif d'accès radio de desserte, d'un contexte du terminal en provenance du dispositif d'accès radio qui attribue l'identifiant de terminal ; et
la réception (206), par le dispositif d'accès radio de desserte, du contexte du terminal et des premières informations en provenance du dispositif d'accès radio qui attribue l'identifiant de terminal.

4. Procédé selon l'une quelconque des revendications 1 à 3, dans lequel une clé utilisée pour chiffrer le premier paquet de données de liaison montante est générée par négociation entre le terminal et le dispositif d'accès radio qui attribue l'identifiant de terminal.

5. Dispositif d'accès radio de desserte (300), comprenant :
un récepteur (302) conçu pour recevoir un premier paquet de données de liaison montante et un identifiant de terminal en provenance d'un terminal qui est dans un état inactif et qui commute à partir d'un dispositif d'accès radio qui attribue l'identifiant de terminal au dispositif d'accès radio de desserte, dans lequel le premier paquet de données de liaison montante comprend des données de liaison montante ; et
un émetteur (301), conçu pour envoyer des premières informations au terminal lorsque le dispositif d'accès radio qui attribue l'identifiant de terminal n'est pas le dispositif d'accès radio de desserte, dans lequel les premières informations sont utilisées pour déterminer une clé utilisée pour chiffrer un second paquet de données de liaison montante depuis le terminal, ou pour ordonner au terminal de déduire la clé utilisée pour chiffrer le second paquet de données de liaison montante, dans lequel
le récepteur est en outre conçu pour recevoir le second paquet de données de liaison montante du terminal, dans lequel le second paquet de données de liaison montante comprend les données de liaison montante ou les données de liaison montante nouvellement transmises, et
dans lequel le dispositif d'accès radio comprend en outre un processeur (303) conçu pour rejeter le premier paquet de données de liaison montante.

6. Dispositif d'accès radio selon la revendication 5, dans lequel
le récepteur est en outre conçu pour recevoir les premières informations du dispositif d'accès radio qui attribue l'identifiant de terminal.

7. Dispositif d'accès radio selon la revendication 5 ou 6, dans lequel
l'émetteur est en outre conçu pour envoyer une requête au dispositif d'accès radio qui attribue l'identifiant de terminal, dans lequel la requête est utilisée pour obtenir un contexte du terminal ; et
le récepteur est en outre conçu pour recevoir le contexte du terminal et les premières informations en provenance du dispositif d'accès radio qui attribue l'identifiant de terminal.

8. Dispositif d'accès radio selon l'une quelconque des revendications 5 à 7, dans lequel une clé utilisée pour chiffrer le premier paquet de données de liaison montante est générée par négociation entre le terminal et le dispositif d'accès radio qui attribue l'identifiant de terminal.
